# EUROPEAN PATENT APPLICATION

(11) **EP 2 360 566 A2**
(43) Date of publication of application: **24.08.2011**
(21) Application number: 11152850.1
(22) Date of filing: 01.02.2011
(51) Int. Cl.: G06F 3/048, H04M 1/725

(54) **Method and apparatus for selecting hyperlinks**

(30) Priority: 05.02.2010 KR 20100011189
(71) Applicant: Samsung Electronics Co., Ltd., Yeongtong-gu Suwon-si, Gyeonggi-do (KR)
(72) Inventor: Kim, Gyu-young, Gyeonggi-do (KR); Choi Ryuan, Gyeonggi-do (KR); Lee Eun-mi, Seoul (KR)
(74) Representative: Jenkins, Richard Gavin

(57) **Abstract**

A method and apparatus for selecting a hyperlink are provided, including obtaining a coordinate corresponding to a touch or a click input when the touch or click input to a web page is sensed; searching for at least one candidate hyperlink existing near the coordinate; enlarging a region including the at least one candidate hyperlink; and changing the at least one candidate hyperlink to be distinguishable from other hyperlinks.

## Description

### PRIORITY

This application claims priority under 35 U.S.C. § 119(a) to Korean Patent Application No. 10-2010-0011189, filed on February 5, 2010, in the Korean Intellectual Property Office, the entire disclosure of which is incorporated herein by reference.

### BACKGROUND OF THE INVENTION

### 1. Field of the Invention

The present invention generally relates to a web-service in a mobile device, and more particularly, to a method and apparatus for selecting hyperlinks in a mobile device having a small screen.

### 2. Description of the Related Art

Recently, mobile devices have acquired the ability to browse the web, and accordingly, functions for facilitating web-browsing conveniently like in a desktop computer in the mobile devices are necessary. Specifically, a conventional mobile browser shows a web page that is produced to be suitable for a resolution of the desktop computer in an overview mode by reducing the size of the web page according to the resolution of the screen of the mobile device. In the reduced web page, it is difficult for a user of the mobile device to touch or click a hyperlink in the web page accurately. In particular, it becomes more difficult for a user to manipulate the web page when the mobile device uses a touch-type input using the fingers.

### SUMMARY OF THE INVENTION

The present invention provides a method and apparatus for selecting a hyperlink by touching or clicking the hyperlink in a web page in a mobile device.

According to an aspect of the present invention, there is provided a method of selecting a hyperlink, the method including obtaining a coordinate corresponding to a touch or a click input when the touch or click input to a web page is sensed; searching for at least one candidate hyperlink existing near the coordinate; enlarging a region including the at least one candidate hyperlink; and changing the at least one candidate hyperlink to be distinguishable from other hyperlinks.

The method may further comprise outputting a predetermined sound so that the enlargement of the region including the candidate hyperlink is distinguished from a general screen enlargement.

The method may further comprise performing a function corresponding to a selected candidate hyperlink, when a touch or a click input of one of the candidate hyperlinks is sensed in the enlarged screen.

The method may further comprise displaying the previous image before enlarging the screen, when a touch or click input of other portions than at least one candidate hyperlink is sensed in the enlarged screen.

The method may further comprise enlarging the screen further when a long tap input or a double click input is sensed in the enlarged screen.

According to another aspect of the present invention, there is provided an apparatus for selecting a hyperlink, the apparatus including a web browser, wherein the web browser including an event processing unit for obtaining a coordinate corresponding to a touch or click input when the touch or click input is sensed by a web page; a hyperlink searching unit searching for at least one candidate hyperlink existing near the coordinate; and a hyperlink processing unit for enlarging a region including the at least one candidate hyperlink, and changing the at least one candidate hyperlink to be distinguishable from other hyperlinks.

### BRIEF DESCRIPTION OF THE DRAWINGS

The above and other features and advantages of the present invention will become more apparent by describing in detail embodiments thereof with reference to the attached drawings in which:
FIG. 1 is a block diagram of an apparatus for selecting a hyperlink according to an embodiment of the present invention;
FIG. 2 is a flowchart illustrating a method of selecting a hyperlink, according to an embodiment of the present invention;
FIG. 3 is a flowchart illustrating a method of selecting a hyperlink, according to another embodiment of the present invention;
FIG. 4 is a diagram illustrating an example of displaying a reduced web page in a mobile browser;
FIG. 5 is a diagram illustrating an example of expanding a region including candidate hyperlinks after sensing a clicking or a touch input to the screen of FIG. 4;
FIG. 6 is a diagram illustrating an expanded view of the screen of FIG. 5; and
FIG. 7 is a diagram illustrating an example of a user clicking or touching other regions than the candidate hyperlinks in the screen of FIG. 6.

### DETAILED DESCRIPTION OF EMBODIMENTS OF THE PRESENT INVENTION

Hereinafter, embodiments of the present invention will be described in detail with reference to accompanying drawings.

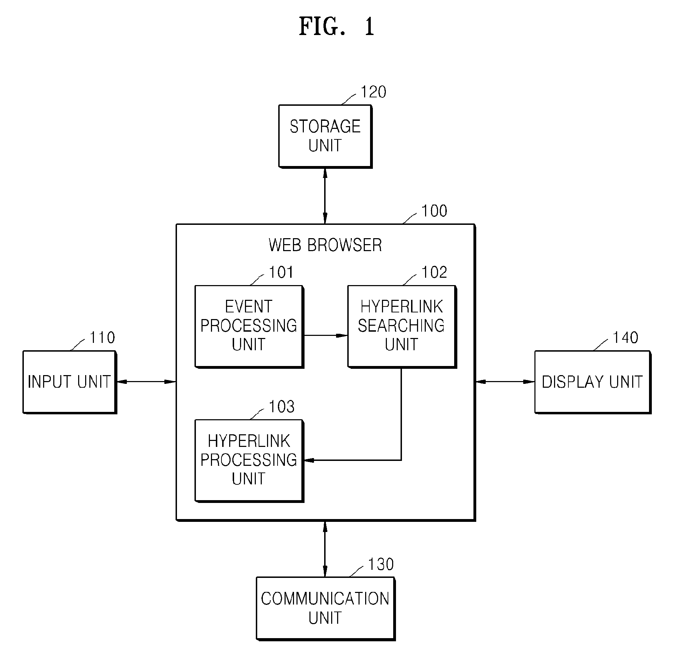

FIG. 1 is a block diagram of a hyperlink selection apparatus according to an embodiment of the present invention.

Referring to FIG. 1, the hyperlink selection apparatus is a computing device capable of web-browsing that includes a communication unit 130 for communicating with a web server (not shown), an input unit 110, such as, for example, a touch screen, a mouse, or a keyboard, for processing input of a user, a display unit 140 for displaying a web page received from a web browser 100 and the web server, a storage unit 120 for storing application programs such as the web browser and data required to provide the user with the web-service, and a controller (not shown) that is a processor for controlling the communication unit 130, the input unit 110, the display unit 140, and the storage unit 120 and executing the web browser 100 for providing the web-service.

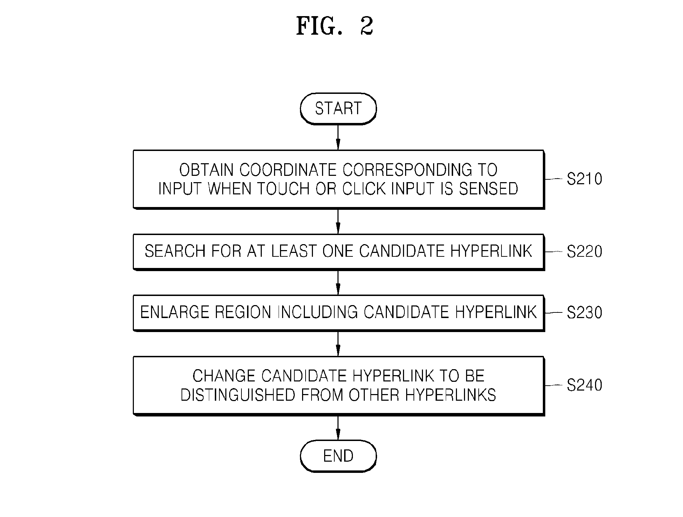

The web browser 100 includes an event processing unit 101 sensing a touch input or a click input to a web page and obtaining coordinates corresponding to the input, a hyperlink searching unit 102 searching for at least one candidate hyperlink existing near the input coordinates, and a hyperlink effect processing unit 103 for enlarging a region including the at least one candidate hyperlink and processing the candidate hyperlink to be distinguishable from other hyperlinks. Examples of each of the units will be described with reference to FIGS. 2 to 7.

FIG. 2 is a flowchart illustrating a method of selecting a hyperlink, according to an embodiment of the present invention.

Referring to FIG. 2, when a touch or a click input is sensed when a web page requested by a user is displayed on a web browser, a coordinate corresponding to the input is calculated in step S210. Additionally, at least one candidate hyperlink existing near the calculated coordinate is searched for in step S220. The candidate hyperlink refers to a hyperlink that is expected to be selected by the user. When the candidate hyperlink is determined, a region including the at least one candidate hyperlink is expanded so that the user may accurately touch or click the desired hyperlink in step S230, and the candidate hyperlink is processed to be distinguishable from other hyperlinks in step S240.

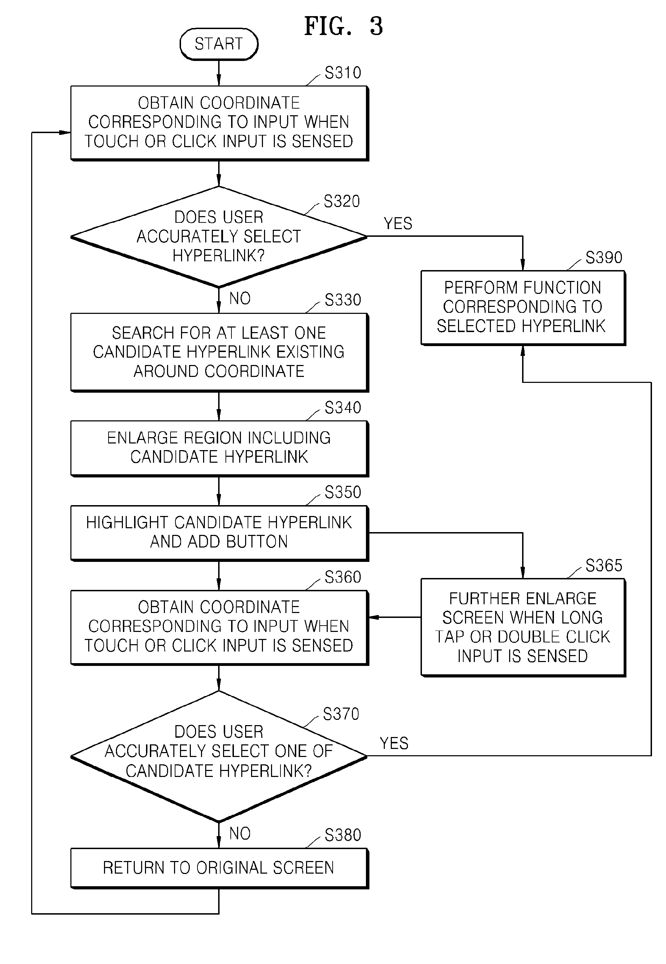

FIG. 3 is a flowchart illustrating a method of selecting a hyperlink, according to another embodiment of the present invention.

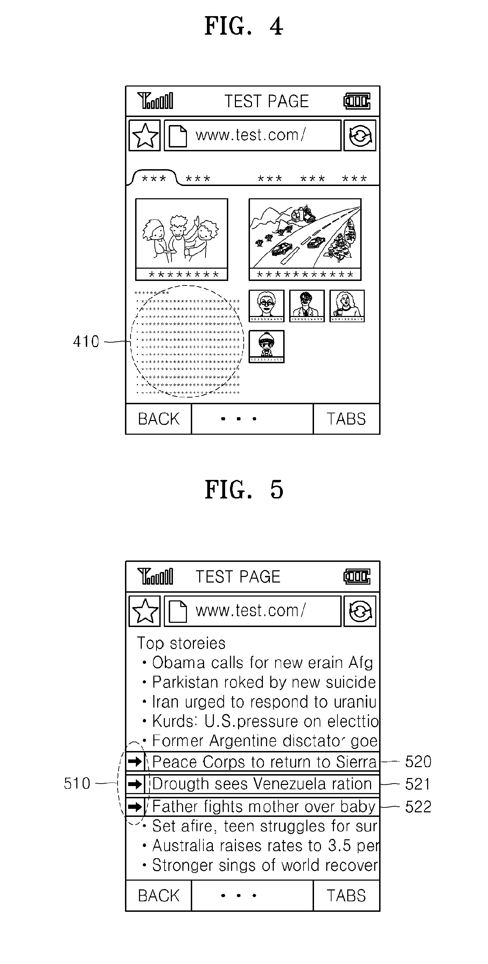

The user may touch or click a location in order to select a hyperlink in a web page. However, in a mobile web browser, the web page is reduced as shown in FIG. 4, and, thus, it is difficult to accurately touch or click the hyperlink desired by the user. Referring to FIGS. 1 and 3, the event processing unit 101 calculates the touched or clicked location to obtain the coordinate of the location when the touch or click input is sensed by the web page in step S310. It is then determined whether the user has accurately selected the hyperlink with the input coordinate in step S320. If the user has accurately touched or clicked the hyperlink, a function (such as opening a desired website) corresponding to the selected hyperlink is performed in step S390. If the user does not select the hyperlink accurately, the method proceeds to step S330 in order to make it easier for the user to select the hyperlink. If a zoom level of the web page that is currently displayed is equal to or greater than a predetermined level, the method does not proceed to stepS330, because the web page need not be enlarged more when the web page is sufficiently large enough to select the hyperlink easily.

Referring to FIGS. 1 and 3, the hyperlink searching unit 102 determines at least one hyperlink that is included within a predetermined distance from the input coordinate among the hyperlinks existing on the web page as a candidate hyperlink in step S330. The hyperlink processing unit 103 then enlarges a region including the candidate hyperlink to a predetermined level in step S340. In the screen of FIG. 4, when the user touches or clicks a point within a region 410, three candidate hyperlinks 520, 521, and 522 are determined as the candidate hyperlinks, as shown in FIG. 5, and the web page is enlarged based on the candidate hyperlinks 520 through 522. The hyperlink processing unit 103 may output a predetermined sound so as to distinguish the enlargement of the region including the candidate hyperlinks 520 through 522 from general screen enlargement, so that the user may recognize the enlargement easily. Additionally, the hyperlink processing unit 103 may highlight the candidate hyperlinks 520 through 522 and add a predetermined button image 510 as shown in FIG. 5, step S350. In the example shown in FIG. 5, the candidate hyperlinks 520 through 522 are encircled by dashed lines for emphasis, however, the present invention is not limited thereto. That is, other emphasizing methods, such as, for example, different colors and bolding, may also be used.

The event processing unit 101 calculates a coordinate corresponding to a touch or click input when the touch or click input is sensed in the enlarged web page in step S360. It is determined whether the user has accurately selected one of the candidate hyperlinks 520 through 522 or touches other regions besides the candidate hyperlinks 520 through 522, by referring to the calculated coordinate in step S370. If the user accurately selects one of the candidate hyperlinks 520 through 522, an event corresponding to the selected candidate hyperlink is performed. Consequently, the function corresponding to the candidate hyperlink is performed in step S390 of FIG. 3. If it is determined that the touch or click input is not a selection of one of the candidate hyperlinks, an event for providing the web page before enlarging the web page is determined. Thus, the original screen is displayed in step S380. Even when other hyperlinks than the candidate hyperlinks are touched or clicked, the original screen may be displayed without processing the touch or click as the selection of a touched hyperlink. When returning to the original screen, a predetermined sound may be output so as to distinguish the return from the general screen reduction.

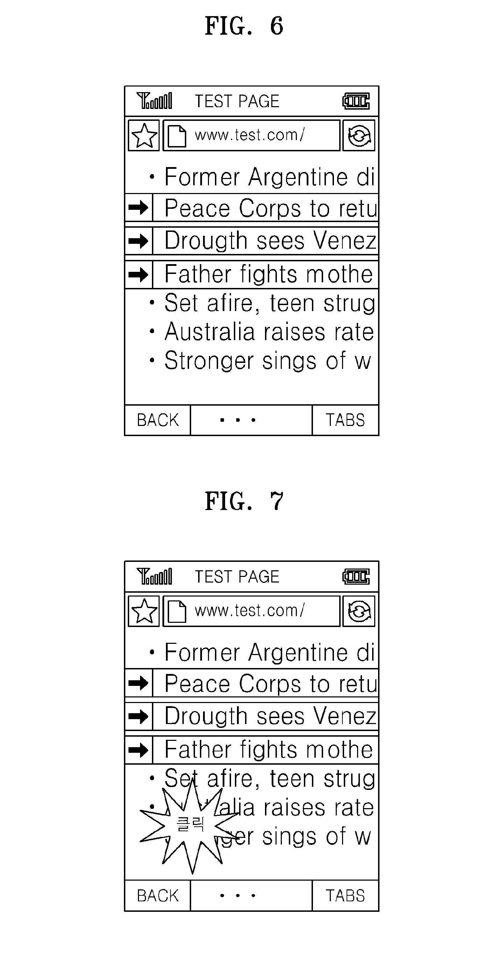

On the other hand, if the user wants to enlarge the web page more than the currently enlarged screen to select the hyperlink, i.e., if the user is not satisfied with the current enlargement and hyperlink process, the user may further enlarge the web page by using the touch or click with another input process. In the present embodiment, a long tap or a double click input is used. When the event processing unit 101 senses the long tap or the double click input to the enlarged screen, the event processing unit 101 determines the input as an event for further enlarging the screen. Therefore, the region including the candidate hyperlinks is enlarged more, as shown in FIG. 6, step S365. In the screen that is enlarged again, when a touch or click input is sensed, the method proceeds to step S360. That is, a coordinate corresponding to the input is calculated in step S360, and when one of the candidate hyperlinks 520 through 522 is selected accurately, the function corresponding to the selected hyperlink is performed in step S390. FIG. 7 shows an example of the user clicking or touching another portion than the candidate hyperlinks in the screen shown in FIG. 6. The original screen, that is, the web page of FIG. 4, is displayed in step S380. A predetermined sound may also be output for distinguishing the return to the original screen from a general screen reduction.

The present invention can also be embodied as computer-readable codes on a computer-readable recording medium. The computer-readable recording medium is any data storage device that can store data which can be thereafter read by a computer system. Examples of the computer-readable recording medium include Read-Only Memory (ROM), Random-Access Memory (RAM), CD-ROMs, magnetic tapes, floppy disks, optical data storage devices, and carrier waves (such as data transmission through the Internet). The computer-readable recording medium can also be distributed over network coupled computer systems so that the computer-readable code is stored and executed in a distributed fashion.

While the present invention has been particularly shown and described with reference to embodiments thereof, it will be understood by those of ordinary skill in the art that various changes in form and details may be made therein without departing from the spirit and scope of the present invention as defined by the following claims and their equivalents.

## Claims

1. A method of selecting a hyperlink, the method comprising the steps of:
obtaining a coordinate corresponding to a touch or a click input when the touch or click input to a web page is sensed;
searching for at least one candidate hyperlink existing near the coordinate;
enlarging a region including the at least one candidate hyperlink; and
changing the at least one candidate hyperlink to be distinguishable from other hyperlinks.

2. The method of claim 1, wherein changing the at least one candidate hyperlink comprises adding a predetermined button image to the candidate hyperlink.

3. The method of claim 2, wherein changing the at least one candidate hyperlink further comprises highlighting the candidate hyperlink.

4. The method of claim 1, further comprising:
outputting a predetermined sound so that the enlargement of the region including the candidate hyperlink is distinguishable from a general screen enlargement.

5. The method of claim 1, wherein the search for the at least one candidate hyperlink comprises:
selecting hyperlinks within a predetermined distance from the coordinate among the hyperlinks existing in the web page as the candidate hyperlinks.

6. The method of claim 1, further comprising:
performing a function corresponding to a selected candidate hyperlink, when a touch or a click input of one of the candidate hyperlinks is sensed in the enlarged screen.

7. The method of claim 1, further comprising:
displaying the previous image before enlarging the screen, when a touch or click input of other portions than at least one candidate hyperlink is sensed in the enlarged screen.

8. A non-transitory computer-readable recording medium having embodied thereon a computer program for executing the method of selecting a hyperlink, comprising:
a first code segment for obtaining a coordinate corresponding to a touch or a click input when the touch or click input to a web page is sensed;
a second code segment for searching for at least one candidate hyperlink existing near the coordinate;
a third code segment for enlarging a region including the at least one candidate hyperlink; and
a fourth code segment for changing the at least one candidate hyperlink to be distinguishable from other hyperlinks.

9. An apparatus for selecting a hyperlink, the apparatus comprising a web browser, wherein the web browser comprises:
an event processing unit for obtaining a coordinate corresponding to a touch or click input when the touch or click input is sensed by a web page;
a hyperlink searching unit searching for at least one candidate hyperlink existing near the coordinate; and
a hyperlink processing unit for enlarging a region including the at least one candidate hyperlink, and changing the at least one candidate hyperlink to be distinguishable from other hyperlinks.

10. The apparatus of claim 9, wherein the hyperlink processing unit adds a predetermined button image to the candidate hyperlink.

11. The apparatus of claim 10, wherein the hyperlink processing unit highlights the candidate hyperlink.

12. The apparatus of claim 9, wherein the hyperlink processing unit outputs a predetermined sound so that the enlargement of the region including the candidate hyperlink is distinguishable from a general screen enlargement.

13. The apparatus of claim 9, wherein the hyperlink searching unit selects hyperlinks included within a predetermined distance from the coordinate among the hyperlinks existing in the web page as the candidate hyperlinks.

14. The apparatus of claim 9, wherein when a touch or click input of one of the at least one candidate hyperlink is sensed in the enlarged screen, the event processing unit determines the input as an event for performing a function corresponding to the selected candidate hyperlink.

15. The apparatus of claim 9, wherein when a touch or click input of other regions than the at least one candidate hyperlink is sensed in the enlarged screen, the event processing unit determines the input as an event for providing the web page before enlarging the screen.
